# FASCICULE DE BREVET EUROPEEN

(11) **EP 3 728 059 B1**
(45) Date de publication et mention de la délivrance du brevet: **10.11.2021**
(21) Numéro de dépôt: 18822397.8
(22) Date de dépôt: 21.12.2018
(51) Int. Cl.: B65D 47/08, B65D 25/48, B65D 25/40, A47J 41/00

(54) **BOUTEILLE MUNIE D'UN DISPOSITIF DE VERROUILLAGE DANS LE BOUCHON**
FLASCHE MIT EINER VERRIEGELUNGSVORRICHTUNG IM VERSCHLUSS
BOTTLE PROVIDED WITH A LOCKING DEVICE IN THE CLOSURE

(30) Priorité: 22.12.2017 FR 1763066
(43) Date de publication de la demande: 28.10.2020
(73) Titulaire: SEB S.A., 69130 Ecully (FR)
(72) Inventeur: PLICHON, Stéphane, 74350 ALLONZIER-LA-CAILLE (FR)
(74) Mandataire: SEB Développement
(86) Numéro de dépôt international: PCT/EP2018/086568
(87) Numéro de publication internationale: WO 2019/122325

(56) Documents cités:
- JP-A- 2013 056 680
- KR-A- 20150 047 044

## Description

La présente invention concerne une bouteille destinée à transporter une boisson comportant un bec verseur amovible qui permet de faciliter le nettoyage de la bouteille.

On notera que, dans ce document, les termes «longitudinal», «transversal», «horizontal », «vertical», «inférieur», «supérieur», «haut», «bas», employés pour décrire la bouteille, font référence à cette bouteille en situation d'usage, lorsqu'elle est posée sur un plan horizontal.

Il est connu du document JP2013056680A une bouteille destinée à transporter une boisson comportant un corps de réception de la boisson, un bouchon comportant une partie externe, une partie interne et un couvercle. La partie externe est destinée à être attachée de manière amovible au corps de réception. La partie interne comporte un bec verseur et un conduit de passage de la boisson. Le couvercle est monté mobile sur la partie externe entre une position de fermeture du conduit et une position d'ouverture du conduit. La partie interne est agencée de manière amovible dans la partie externe. Dans ce document, le bouchon comporte un dispositif de verrouillage de la partie interne dans la partie externe qui comporte une tête de verrouillage agencée à une première extrémité d'une lame mobile à l'encontre d'un ressort, la tête de verrouillage étant mobile entre une position de maintien dans laquelle la partie interne est maintenue dans la partie externe et une position de libération dans laquelle la partie interne peut être retirée de la partie externe.

Une telle bouteille comporte un dispositif de verrouillage qui comporte plusieurs pièces qui rendent le produit cher à fabriquer.

De plus, un dispositif de verrouillage qui met en œuvre plusieurs pièces peut rendre le produit moins fiable dans le temps.

Le but de la présente invention est de remédier aux inconvénients précités et de proposer une bouteille destinée à transporter une boisson présentant une conception simple et économique à mettre en œuvre.

Un autre but de l'invention est de proposer une bouteille présentant une ergonomie améliorée pour une utilisation simple et fiable.

Ces buts sont atteints avec une bouteille destinée à transporter une boisson comportant un corps de réception de la boisson, un bouchon comportant une partie externe destinée à être attachée de manière amovible au corps de réception et une partie interne comportant un conduit de passage de la boisson. La partie interne est agencée de manière amovible dans la partie externe. Le bouchon comporte au moins un dispositif de verrouillage par déformation élastique de la partie interne dans la partie externe, le dispositif de verrouillage par déformation élastique comportant une tête de verrouillage mobile entre une position de maintien dans laquelle la partie interne est maintenue dans la partie externe et une position de libération dans laquelle la partie interne peut être retirée de la partie externe. La tête de verrouillage est agencée à une première extrémité d'un élément élastiquement déformable dont une deuxième extrémité est rattachée à la partie interne, la tête de verrouillage étant amenée dans la position de libération par déformation élastique de l'élément élastiquement déformable, en exerçant une pression manuelle sur la tête de verrouillage. L'élément élastiquement déformable comporte une portion en arc-de-cercle qui s'étend sur un angle supérieur à 90 degrés, de préférence supérieur à 120 degrés.

La partie interne, l'élément élastiquement déformable et la tête de verrouillage ne forment qu'une seule pièce. Une telle construction est particulièrement économique.

Le bouchon présente une taille limitée et l'élément élastiquement déformable doit être agencé dans un espace réduit. Ainsi, une portion en arc-de-cercle permet d'augmenter sa longueur pour autoriser un déplacement suffisant de la tête de verrouillage.

La portion en arc-de-cercle de l'élément élastiquement déformable est adaptée, lors de l'opération d'insertion et de retrait de la partie interne de la partie externe, à se déformer de manière élastique de façon à ce que la tête de verrouillage passe de sa position de maintien à sa position de libération, et inversement. Un tel élément élastiquement déformable permet d'obtenir une déformation élastique importante à faible effort facilitant l'insertion et le retrait de la partie interne.

De préférence, la portion en arc-de-cercle s'étend sur un angle à 180 degrés.

Une portion en arc-de-cercle en forme de U permet d'obtenir la longueur optimum de l'élément élastiquement déformable. Ainsi, l'effort à appliquer sur la tête de verrouillage par l'utilisateur pour la faire passer de sa position de maintien à sa position de libération est minimisé.

De préférence, l'élément élastiquement déformable comporte une portion droite qui s'étend depuis la tête de verrouillage jusqu'à la portion en arc-de-cercle sur une longueur L1, la portion en arc-de-cercle s'étendant sur une longueur L2, le rapport L1/L2 étant supérieur à 0.5 et inférieur à 1.

Un tel élément élastiquement déformable présente une élasticité importante permettant de maximiser sa déformation élastique dans un espace restreint entre la partie interne et la partie externe tout en gardant une rigidité importante.

Avantageusement, l'élément élastiquement déformable présente une section S constante.

Ainsi, l'élément élastiquement déformable présente une conception simple et économique à mettre en œuvre.

Avantageusement, la section S présente une largeur L et une épaisseur E, le rapport L/E étant supérieur à 5 et inférieur à 10.

Une telle construction de l'élément élastiquement déformable améliore la qualité ressentie par l'utilisateur pendant son usage.

De préférence, la partie externe comporte au moins un organe de blocage qui coopère avec l'au moins un dispositif de verrouillage par déformation élastique lors de l'insertion de la partie interne dans la partie externe.

L'au moins un organe de blocage est destiné à maintenir et à bloquer la tête de verrouillage dans sa position de maintien lorsque la partie interne est insérée dans la partie externe. Ainsi, un bon assemblage de la partie interne dans la partie externe est assuré.

Avantageusement, la tête de verrouillage comporte une paroi arrondie qui glisse sur une surface de frottement de l'au moins un organe de blocage lors de l'insertion de la partie interne dans la partie externe, la surface de frottement étant inclinée d'un angle supérieur à 45 degrés par rapport à un plan horizontal.

Lors de l'insertion de la partie interne, la surface de frottement vient en contact avec la paroi arrondie et lui applique une force de réaction perpendiculaire à la surface de frottement pour déformer l'élément élastiquement déformable et déplacer la tête de verrouillage. Un angle supérieur à 45 degrés permet de minimiser la force de réaction et ainsi de minimiser l'effort d'insertion de la partie interne.

De manière avantageuse, la tête de verrouillage comporte une zone de manœuvre qui permet à l'utilisateur de faire passer la partie interne de sa position de maintien à sa position de libération.

Quand la tête de verrouillage est dans sa position de maintien, l'utilisateur applique un effort sur la zone de manœuvre en la tirant vers le centre de la partie interne et en la poussant vers le bas pour faire sortir la partie interne de la partie externe. La zone de manœuvre est agencée sur une surface supérieure de la tête de verrouillage pour être visible par l'utilisateur. Ainsi, l'utilisateur peut facilement repérer la zone de manœuvre pour effectuer l'opération de retrait.

Dans une réalisation préférentielle, le bouchon comporte un organe d'engagement agencé sur la partie interne de manière diamétralement opposée à l'au moins un dispositif de verrouillage par déformation élastique, un organe d'engagement complémentaire étant agencé sur la partie externe pour coopérer avec l'organe d'engagement.

L'organe d'engagement coopère avec l'organe d'engagement complémentaire permettant à la fois, lors de l'insertion de la partie interne, de la positionner correctement dans la partie externe au début de son insertion, et aussi de maintenir la partie interne dans la partie externe une fois qu'elle est insérée.

De manière avantageuse, la partie interne comporte un épaulement qui s'étend au-dessus de la portion en arc-de-cercle vers la direction de la portion droite de façon à ce que l'élément élastiquement déformable ne soit pas visible de l'extérieur lorsque la partie interne est maintenue dans la partie externe.

Ainsi, l'épaulement de la partie interne permet de cacher l'élément élastiquement déformable pour qu'il ne soit pas visible de l'extérieur lorsque la partie interne est insérée dans la partie externe et, ainsi, d'améliorer le rendu esthétique du bouchon.

De manière avantageuse, la partie interne comporte un bec verseur et le bouchon comporte un couvercle monté mobile sur la partie externe entre une position de fermeture du conduit de passage et une position d'ouverture du conduit de passage.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'une bouteille avec le couvercle en position de fermeture du conduit selon un mode particulier de réalisation de l'invention,
- la figure 2 est une vue en perspective de la bouteille de la figure 1 avec le couvercle en position d'ouverture du conduit,
- la figure 3 est une vue en éclaté de la bouteille de la figure 2,
- la figure 4 est une vue du dessus de la bouteille de la figure 2,
- la figure 5 est une vue en coupe du bouchon de la bouteille illustrant l'au moins un dispositif de verrouillage par déformation élastique de la partie interne dans la partie externe avec la tête de verrouillage en position de maintien, suivant la ligne de coupe V-V de la figure 4,
- la figure 6 est une vue en coupe du bouchon de la figure 5 sans le couvercle, illustrant la tête de verrouillage en position de maintien, la partie interne étant insérée et maintenue dans la partie externe,
- la figure 7 est une vue en coupe du bouchon de la figure 6 illustrant la tête de verrouillage dans une position intermédiaire entre la position de libération et la position de maintien,
- la figure 8 est une vue en coupe du bouchon de la figure 6 illustrant la tête de verrouillage en position de libération, et l'organe d'engagement coopérant avec l'organe d'engagement complémentaire.

Seuls les éléments nécessaires à la compréhension ont été représentés. Pour faciliter la lecture des dessins les mêmes éléments portent les mêmes références d'une figure à l'autre.

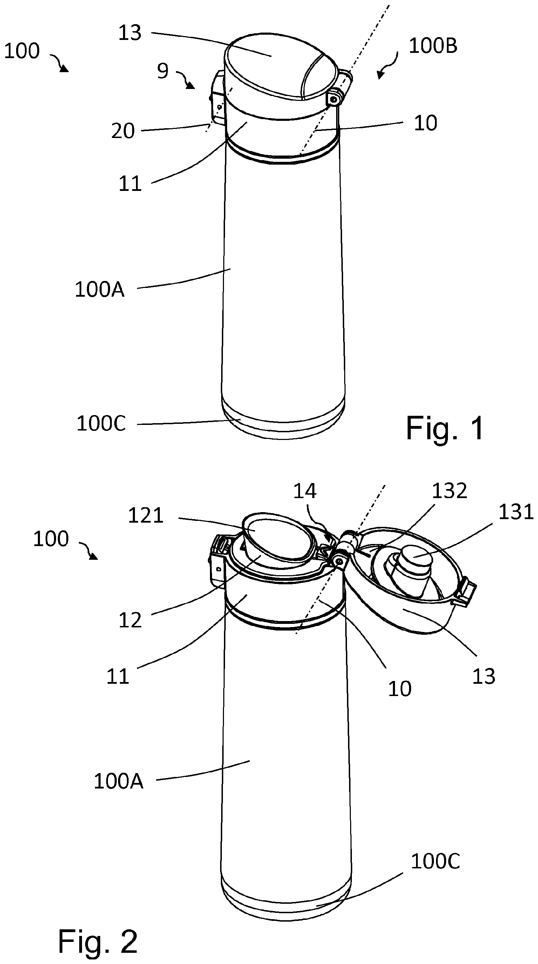

Dans un mode particulier de réalisation de l'invention tel qu'illustré aux figures 1 et 2, une bouteille 100 comporte un corps de réception 100A de la boisson et un bouchon 100B agencé sur une partie supérieure du corps de réception 100A. Dans ce mode particulier de réalisation, une partie du corps de réception 100A est réalisé en acier inoxydable et le corps de réception 100A présente une construction à double-paroi entre laquelle est défini un espace sous vide. Dans d'autres modes de réalisation, le corps de réception 100A est fabriqué à partir de tout matériau approprié comprenant, sans limitation, des matériaux métalliques, composites, plastiques, en verre, polymère et des combinaisons de ceux-ci. La bouteille 100 comporte une base 100C constituée d'un matériau en matière plastique ou en caoutchouc, et agencée sur une partie inférieure du corps de réception 100A pour le protéger des chocs externes.

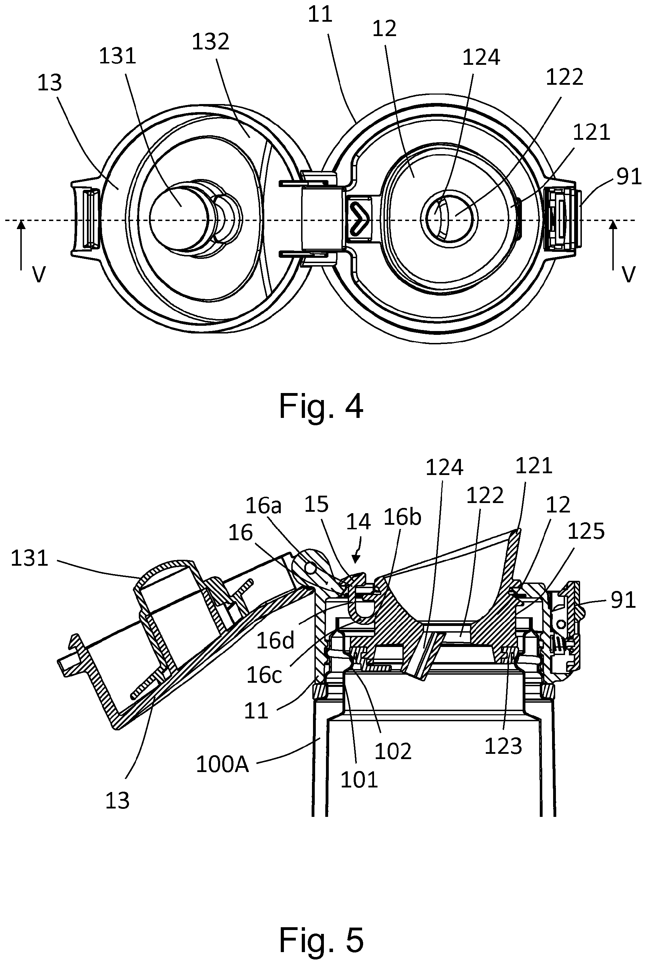

Le bouchon 100B comporte une partie externe 11 qui est attachée à la partie supérieure du corps de réception 100A de manière amovible. Par exemple, la partie externe 11 est vissée sur la partie supérieure du corps de réception 100A. Le bouchon 100B comporte une partie interne 12 dans laquelle sont logés un bec verseur 121 et un conduit 122 de passage de boisson illustré à la figure 4. Le bouchon 100B comporte un couvercle 13 monté pivotant sur la partie externe 11 entre une position de fermeture du conduit 122 et une position d'ouverture du conduit 122.

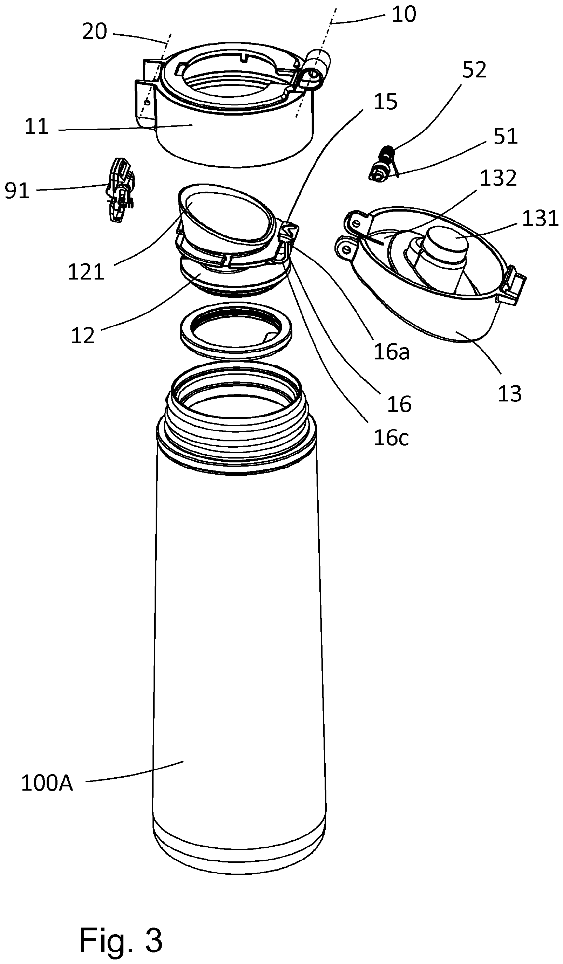

Telle qu'illustrée aux figures 1 à 3, la bouteille 100 comporte un système de verrouillage 9 du couvercle 13 qui est agencé sur le bouchon 100B. Le système de verrouillage 9 comporte un organe de verrouillage prenant la forme d'un bouton de verrouillage 91 qui est pivotant autour d'un axe 20 entre une position de verrouillage dans laquelle le couvercle 13 est maintenu dans sa position de fermeture du conduit 122 et une position de déverrouillage dans laquelle le couvercle 13 n'est plus verrouillé dans sa position de fermeture.

Le couvercle 13 tourne par rapport à la partie externe 11 autour d'un axe de rotation 10. Le bouchon 100B comporte un ressort 52 de rappel du couvercle 13 en position d'ouverture. Le couvercle est articulé autour d'une tige 51 disposée suivant l'axe de rotation 10.

Conformément aux figures 2 à 4, le couvercle 13 comporte un organe de bouchage 131 qui est fait d'une matière souple et est agencé sur une surface interne 132 du couvercle 13. L'organe de bouchage 131 coopère avec le conduit 122 de la partie interne 12 de manière à ce que le passage de la boisson via le conduit 122 soit fermé par l'organe de bouchage 131 de manière étanche lorsque le couvercle 13 est en position de fermeture du conduit 122.

Tel qu'illustré à la figure 5, un élément d'étanchéité 123 de forme annulaire est agencé sur la périphérie d'une partie inférieure de la partie interne 12. Lorsque le bouchon 100B est installé sur la partie supérieure du corps de réception 100A, l'élément d'étanchéité 123 vient en contact de manière serrée avec une portion épaulée 102 qui fait saillie vers l'intérieur sur une paroi intérieure 101 de la partie supérieure du corps de réception 100A, afin de garantir une bonne étanchéité entre la partie interne 12 du bouchon 100B et le corps de réception 100A. La partie interne 12 comporte un trou de passage 124 de mise à l'air qui est agencé au voisinage du conduit 122 sur le côté opposé au bec verseur 121 de façon à ce que l'air puisse passer au travers du trou de passage 124 lorsqu'on verse de la boisson vers l'extérieur du corps de réception 100A.

Le bouchon 100B comporte un dispositif de verrouillage par déformation élastique 14 de la partie interne 12 dans la partie externe 11 qui s'étend depuis une surface extérieure 125 de la partie interne 12. Le dispositif de verrouillage par déformation élastique 14 comporte une tête de verrouillage 15 agencée à une première extrémité 16a d'une lame souple 16. Par lame souple, on comprend un élément élastiquement déformable lorsqu'on exerce une pression à l'aide du doigt. La lame souple 16 comporte une portion droite 16d qui s'étend depuis la tête de verrouillage 15 jusqu'à une portion en arc-de-cercle 16c sur une longueur L1. La portion en arc-de-cercle 16c s'étend sur une longueur L2. Le rapport L1/L2 est supérieur à 0.5 et inférieur à 1. La portion en arc-de-cercle 16c s'étend jusqu'à une deuxième extrémité 16b de la lame souple 16 qui est rattachée à la surface extérieure 125 de la partie interne 12. La portion en arc-de-cercle 16c en forme de U s'étend sur un angle à 180 degrés permettant d'obtenir la longueur optimum de la lame souple 16. La lame souple 16 présente avantageusement une section S constante s'étendant sur une largeur L et une épaisseur E, le rapport L/E étant supérieur à 5 et inférieur à 10.

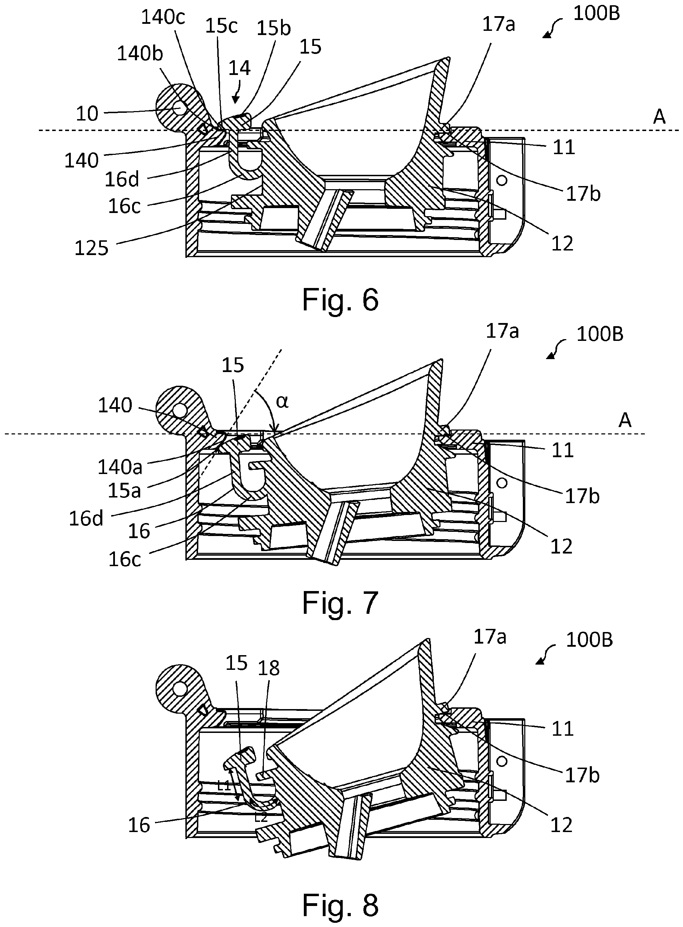

Conformément aux figures 6 à 8, la tête de verrouillage 15 est mobile entre une position de maintien dans laquelle la partie interne 12 est maintenue dans la partie externe 11 et une position de libération dans laquelle la partie interne 12 peut être retirée de la partie externe 11, en passant par une position intermédiaire. La tête de verrouillage 15 coopère avec un organe de blocage 140 agencé au voisinage de l'axe de rotation 10 sur une ouverture supérieure de la partie externe 11. L'organe de blocage 140 est destiné à maintenir et à bloquer la tête de verrouillage 15 dans sa position de maintien lorsque la partie interne 12 est insérée dans la partie externe 11.

Comme illustré sur la figure 6, lorsque la tête de verrouillage 15 est dans sa position de maintien, une portion d'extension 15c de la tête de verrouillage 15 vient en appui contre une paroi latérale 140b et une paroi horizontale 140c de l'organe de blocage 140. La tête de verrouillage 15 comporte une zone de manœuvre 15b qui permet à l'utilisateur de faire passer la partie interne 12 de sa position de maintien à sa position de libération. Cette zone de manœuvre 15b est légèrement inclinée par rapport à un plan horizontal A dans le but de faciliter l'opération de retrait de la partie interne 12.

Le bouchon 100B comporte un organe d'engagement 17a qui consiste en une protubérance sur la surface extérieure 125 de la partie interne 12. L'organe d'engagement 17a est agencé de manière diamétralement opposée au dispositif de verrouillage par déformation élastique 14. L'organe d'engagement 17a vient appuyer sur un organe d'engagement complémentaire formé par un logement de réception 17b situé au niveau de l'ouverture supérieure de la partie externe 11 permettant à la fois de positionner correctement la partie interne 12 dans la partie externe 11 lors de son insertion et de la maintenir dans la partie externe 11 une fois qu'elle est insérée.

En se référant à la figure 7, la tête de verrouillage 15 comporte une paroi arrondie 15a qui glisse sur une surface de frottement 140a de l'organe de blocage 140 lors de l'insertion de la partie interne 12 dans la partie externe 11. La surface de frottement 140a est inclinée à un angle α supérieur à 45 degrés par rapport au plan horizontal A. Lors de l'insertion de la partie interne 12, la tête de verrouillage 15 passe de sa position de libération à sa position de maintien en passant par la position intermédiaire dans laquelle la surface de frottement 140a vient en contact avec la paroi arrondie 15a et lui applique une force de réaction perpendiculaire à la surface de frottement 140a pour déformer de manière élastique la lame souple 16 notamment la portion en arc-de-cercle 16c et déplacer la tête de verrouillage 15. Un angle α supérieur à 45 degrés permet de minimiser la force de réaction et ainsi de minimiser l'effort d'insertion fourni par l'utilisateur.

En fonctionnement, pour retirer la partie interne 12 qui est initialement maintenue dans la partie externe 11, l'utilisateur sépare d'abord le bouchon 100B du corps de réception 100A en dévissant le bouchon 100B. Ensuite, il applique un effort avec son pouce sur la zone de manœuvre 15b de la tête de verrouillage 15 en la déplaçant vers l'intérieur de la partie interne 12 pour entraîner une déformation élastique de la lame souple 16 notamment la portion en arc-de-cercle 16c en forme de U. Ainsi, la tête de verrouillage 15 passe de sa position de maintien à sa position intermédiaire dans laquelle la tête de verrouillage 15 n'est plus supportée par l'organe de blocage 140. L'utilisateur pousse ensuite la tête de verrouillage 15 vers le bas pour la faire passer dans sa position de libération. Par conséquent, la partie interne 12 est retirée de la partie externe 11.

Lorsque l'utilisateur souhaite assembler la partie interne 12 dans la partie externe 11, il saisit la partie interne 12 et l'insère dans la partie externe 11 du bas vers le haut en positionnant en premier lieu l'organe d'engagement 17a dans l'organe d'engagement complémentaire formé par le logement de réception 17b. Ensuite, il pousse la partie interne 12 vers le haut tout en gardant l'organe d'engagement 17a en appui sur le logement de réception 17b pour que la tête de verrouillage 15 passe de sa position de libération à sa position intermédiaire dans laquelle la surface de frottement 140a vient en contact avec la paroi arrondie 15a et lui applique une force de réaction perpendiculaire à la surface de frottement 140a pour engendrer une déformation élastique de la lame souple 16. L'utilisateur continue à pousser la partie interne 12 pour déformer la lame souple 16 jusqu'au moment où il entend un son de clic signalant le retour élastique de la lame souple 16. Ainsi, une bonne mise en position de la partie interne 12 dans la partie externe 11 est obtenue.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention, qui est définie par les revendications.

Dans une variante de réalisation, l'organe de blocage qui coopère avec la tête de verrouillage est agencé au niveau de l'ouverture supérieure de la partie externe sur le côté près du bec verseur. L'organe d'engagement complémentaire est situé au voisinage de l'axe de rotation 10 de manière diamétralement opposée à l'organe de blocage.

Dans une autre variante de réalisation, le dispositif de verrouillage est agencé à 90 degrés par rapport au diamètre passant par le bec verseur.

De manière réciproque, le bouchon comporte deux dispositifs de verrouillage par déformation élastique disposés de manière diamétralement opposée l'un de l'autre autour de la partie interne.

## Revendications

1. Bouteille (100) destinée à transporter une boisson comportant
- un corps de réception (100A) de la boisson,
- un bouchon (100B) comportant une partie externe (11) destinée à être attachée de manière amovible au corps de réception (100A), et une partie interne (12) comportant un conduit (122) de passage de la boisson,
la partie interne (12) étant agencée de manière amovible dans la partie externe (11), le bouchon (100B) comportant au moins un dispositif de verrouillage par déformation élastique (14) de la partie interne (12) dans la partie externe (11), l'au moins un dispositif de verrouillage par déformation élastique (14) comportant une tête de verrouillage (15) mobile entre une position de maintien dans laquelle la partie interne (12) est maintenue dans la partie externe (11) et une position de libération dans laquelle la partie interne (12) peut être retirée de la partie externe (11), **caractérisée en ce que** la tête de verrouillage (15) est agencée à une première extrémité (16a) d'un élément élastiquement déformable (16) dont une deuxième extrémité (16b) est rattachée à la partie interne (12), la tête de verrouillage (15) étant amenée dans la position de libération par déformation élastique de l'élément élastiquement déformable (16), en exerçant une pression manuelle sur la tête de verrouillage, l'élément élastiquement déformable (16) comportant une portion en arc-de-cercle (16c) qui s'étend sur un angle supérieur à 90 degrés, de préférence supérieur à 120 degrés.

2. Bouteille (100) selon la revendication 1, **caractérisée en ce que** la portion en arc-de-cercle (16c) s'étend sur un angle à 180 degrés.

3. Bouteille (100) selon l'une quelconque des revendications précédentes, **caractérisée en ce que** l'élément élastiquement déformable (16) comporte une portion droite (16d) qui s'étend depuis la tête de verrouillage (15) jusqu'à la portion en arc-de-cercle (16c) sur une longueur L1, la portion en arc-de-cercle (16c) s'étendant sur une longueur L2, le rapport L1/L2 étant supérieur à 0.5 et inférieur à 1.

4. Bouteille (100) selon l'une quelconque des revendications précédentes, **caractérisée en ce que** l'élément élastiquement déformable (16) présente une section S constante.

5. Bouteille (100) selon la revendication 4, **caractérisée en ce que** la section S présente une largeur L et une épaisseur E, le rapport L/E étant supérieur à 5 et inférieur à 10.

6. Bouteille (100) selon l'une quelconque des revendications précédentes, **caractérisée en ce que** la partie externe (11) comporte au moins un organe de blocage (140) qui coopère avec l'au moins un dispositif de verrouillage par déformation élastique (14) lors de l'insertion de la partie interne (12) dans la partie externe (11).

7. Bouteille (100) selon la revendication 6, **caractérisée en ce que** la tête de verrouillage (15) comporte une paroi arrondie (15a) qui glisse sur une surface de frottement (140a) de l'au moins un organe de blocage (140) lors de l'insertion de la partie interne (12) dans la partie externe (11), la surface de frottement (140a) étant inclinée d'un angle supérieur à 45 degrés par rapport à un plan horizontal (A).

8. Bouteille (100) selon l'une quelconque des revendications précédentes, **caractérisée en ce que** la tête de verrouillage (15) comporte une zone de manœuvre (15b) agencée sur une surface supérieure de la tête de verrouillage (15).

9. Bouteille (100) selon l'une quelconque des revendications précédentes, **caractérisée en ce que** le bouchon (100B) comporte un organe d'engagement (17a) agencé sur la partie interne (12) de manière diamétralement opposée à l'au moins un dispositif de verrouillage par déformation élastique (14), un organe d'engagement complémentaire (17b) étant agencé sur la partie externe (11) pour coopérer avec l'organe d'engagement (17a).

10. Bouteille (100) selon l'une quelconque des revendications 3 à 9, **caractérisée en ce que** la partie interne (12) comporte un épaulement (18) qui s'étend au-dessus de la portion en arc-de-cercle (16c) vers la direction de la portion droite (16d) de façon à ce que la lame souple (16) ne soit pas visible de l'extérieur lorsque la partie interne (11) est maintenue dans la partie externe (12).

11. Bouteille (100) selon l'une quelconque des revendications précédentes, **caractérisée en ce que** la partie interne (12) comporte un bec verseur (121) et **en ce que** le bouchon (100B) comporte un couvercle (13) monté mobile sur la partie externe (11) entre une position de fermeture du conduit (122) de passage et une position d'ouverture du conduit (122) de passage.

## Patentansprüche

1. Flasche (100), zum transportieren eines Getränks umfassend
- einen Aufnahmekörper (100A) für das Getränk,
- einen Verschlusskappe (100B), umfassend einen äußeren Abschnitt (11), bestimmt, um auf entfernbare Weise an dem Aufnahmekörper (100A) befestigt zu werden, und einen inneren Abschnitt (12), umfassend eine Durchgangsleitung (122) für das Getränk,
wobei der innere Abschnitt (12) auf entfernbare Weise in dem äußeren Abschnitt (11) angeordnet ist, der Verschlusskappe (100B) mindestens eine Vorrichtung (14) zum Verschluss durch elastische Verformung des inneren Abschnitts (12) in dem äußeren Abschnitt (11) umfasst, wobei die mindestens eine Vorrichtung (14) zum Verschluss durch elastische Verformung einen zwischen einer Halteposition, in der der innere Abschnitt (12) in dem äußeren Abschnitt (11) gehalten wird, und einer Freigabeposition, in der der innere Abschnitt (12) aus dem äußeren Abschnitt (11) herausgezogen werden kann, beweglichen Verschlusskopf (15) umfasst, **dadurch gekennzeichnet, dass** der Verschlusskopf (15) an einem ersten Ende (16a) eines elastisch verformbaren Elements (16) angeordnet ist, von dem ein zweites Ende (16b) an dem inneren Abschnitt (12) angegliedert ist, wobei der Verschlusskopf (15) durch elastische Verformung des elastisch verformbaren Elements (16) in die Freigabeposition gebracht wird, indem ein Druck auf den Verschlusskopf von Hand ausgeübt wird, wobei das elastisch verformbare Element (16) einen Kreisbogenteil (16c) umfasst, der sich über einen Winkel größer als 90 Grad, vorzugsweise größer als 120 Grad, erstreckt.

2. Flasche (100) nach Anspruch 1, **dadurch gekennzeichnet, dass** der Kreisbogenteil (16c) sich über einen Winkel von 180 Grad erstreckt.

3. Flasche (100) nach einem der vorstehenden Ansprüche, **dadurch gekennzeichnet, dass** das elastisch verformbare Element (16) einen geraden Teil (16d) umfasst, der sich ab dem Verschlusskopf (15) bis zu einem Kreisbogenteil (16c) über eine Länge L1 erstreckt, wobei sich der Kreisbogenteil (16c) über eine Länge L2 erstreckt, wobei das Verhältnis L1/L2 größer als 0,5 und kleiner als 1 ist.

4. Flasche (100) nach einem der vorstehenden Ansprüche, **dadurch gekennzeichnet, dass** das elastisch verformbare Element (16) einen konstanten Querschnitt S aufweist.

5. Flasche (100) nach Anspruch 4, **dadurch gekennzeichnet, dass** der Querschnitt S eine Größe L und eine Dicke E aufweist, wobei das Verhältnis L/E größer als 5 und kleiner als 10 ist.

6. Flasche (100) nach einem der vorstehenden Ansprüche, **dadurch gekennzeichnet, dass** der äußere Abschnitt (11) mindestens ein Blockierungsbauteil (140) umfasst, das bei der Einführung des inneren Abschnitts (12) in den äußeren Abschnitt (11) mit der mindestens einen Vorrichtung (14) zum Verschließen durch elastische Verformung zusammenwirkt.

7. Flasche (100) nach Anspruch 6, **dadurch gekennzeichnet, dass** der Verschlusskopf (15) eine gerundete Wand (15a) umfasst, die bei der Einführung des inneren Abschnitts (12) in den äußeren Abschnitt (11) auf einer Reibungsoberfläche (140a) des mindestens einen Blockierungsbauteils (140) gleitet, wobei die Reibungsoberfläche (140a) bezogen auf eine horizontale Ebene (A) um einen Winkel größer als 45 Grad geneigt ist.

8. Flasche (100) nach einem der vorstehenden Ansprüche, **dadurch gekennzeichnet, dass** der Verschlusskopf (15) einen auf einer oberen Oberfläche des Verschlusskopfs (15) angeordnete Betätigungsbereich (15b) umfasst.

9. Flasche (100) nach einem der vorstehenden Ansprüche, **dadurch gekennzeichnet, dass** der Verschlusskappe (100B) ein auf dem inneren Abschnitt (12) auf diametral entgegengesetzte Weise zu der mindestens einen Vorrichtung (14) zum Verschluss durch elastische Verformung angeordnetes Eingriffsbauteil (17a) umfasst, wobei ein komplementäres Eingriffsbauteil (17b) auf dem äußeren Abschnitt (11) zum Zusammenwirken mit dem Eingriffsbauteil (17a) angeordnet ist.

10. Flasche (100) nach einem der Ansprüche 3 bis 9, **dadurch gekennzeichnet, dass** der innere Abschnitt (12) eine Schulter (18) umfasst, die sich oberhalb des Kreisbogenteils (16c) derart in die Richtung des geraden Teils (16d) erstreckt, dass die flexible Lamelle (16) von der Außenseite nicht sichtbar ist, wenn der innere Abschnitt (11) in dem äußeren Abschnitt (12) gehalten wird.

11. Flasche (100) nach einem der vorstehenden Ansprüche, **dadurch gekennzeichnet, dass** der innere Abschnitt (12) einen Ausgießer (121) umfasst, und dadurch, dass der Verschlusskappe (100B) einen beweglich auf dem äußeren Abschnitt (11) zwischen einer Schließposition der Durchgangsleitung (122) und einer Öffnungsposition der Durchgangsleitung (122) montierten Deckel (13) umfasst.

## Claims

1. Bottle (100) for transporting a beverage having
- a receiving body (100A) for the beverage,
- a closure (100B) having an external part (11) intended to be attached removably to the receiving body (100A), and an internal part (12) having a passage duct (122) for the beverage,
the internal part (12) being arranged removably in the external part (11), the closure (100B) having at least one device (14) for locking the internal part (12) in the external part (11) by elastic deformation, the at least one device (14) for locking by elastic deformation having a locking head (15) that is movable between a retaining position, in which the internal part (12) is retained in the external part (11) and a release position, in which the internal part (12) can be withdrawn from the external part (11), **characterised in that** the locking head (15) is arranged at a first end (16a) of an elastically deformable element (16), a second end (16b) of which is attached to the internal part (12), the locking head (15) being moved into the release position by elastic deformation of the elastically deformable element (16), by exertion of a manual pressure on the locking head, the elastically deformable element (16) having a portion (16c) in the form of a circular arc, which extends through an angle greater than 90 degrees, preferably greater than 120 degrees.

2. Bottle (100) according to claim 1, **characterised in that** the portion (16c) in the form of a circular arc extends through an angle of 180 degrees.

3. Bottle (100) according to any one of the preceding claims, **characterised in that** the elastically deformable element (16) has a straight portion (16d) which extends from the locking head (15) to the portion (16c) in the form of a circular arc over a length L1, the portion (16c) in the form of a circular arc extending over a length L2, the ratio L1/L2 being greater than 0.5 and less than 1.

4. Bottle (100) according to any one of the preceding claims, **characterised in that** the elastically deformable element (16) has a constant cross-section S.

5. Bottle (100) according to claim 4, **characterised in that** the cross-section S has a width L and a thickness E, the ratio L/E being greater than 5 and less than 10.

6. Bottle (100) according to any one of the preceding claims, **characterised in that** the external part (11) has at least one blocking member (140) which engages with the at least one locking device through elastic deformation (14) during the insertion of the internal part (12) in the external part (11).

7. Bottle (100) according to claim 6, **characterised in that** the locking head (15) has a rounded wall (15a) which slides over a friction surface (140a) of the at least one blocking member (140) during the insertion of the internal part (12) into the external part (11), the friction surface (140a) being inclined by an angle greater than 45 degrees with respect to a horizontal plane (A).

8. Bottle (100) according to any one of the preceding claims, **characterised in that** the locking head (15) has a manoeuvring zone (15b) arranged on an upper surface of the locking head (15).

9. Bottle (100) according to any one of the preceding claims, **characterised in that** the closure (100B) has an engagement member (17a) arranged on the internal part (12) diametrically opposite the at least one locking device (14) through elastic deformation, a complementary engagement member (17b) being arranged on the external part (11) to engage with the engagement member (17a).

10. Bottle (100) according to any one of claims 3 to 9, **characterised in that** the internal part (12) has a shoulder (18) which extends above the portion (16c) in the form of a circular arc to the direction of the straight portion (16d) such that the flexible strip (16) is not visible from the outside when the internal part (11) is retained in the external part (12).

11. Bottle (100) according to any one of the preceding claims, **characterised in that** the internal part (12) has a pouring spout (121) and **in that** the closure (100B) has a cover (13) movably mounted on the external part (11) between a closing position of the passage duct (122) and an opening position of the passage duct (122).
